# EUROPÄISCHE PATENTSCHRIFT

(11) **EP 1 131 382 B1**
(45) Veröffentlichungstag und Bekanntmachung des Hinweises auf die Patenterteilung: **26.02.2003**
(21) Anmeldenummer: 99950720.5
(22) Anmeldetag: 14.10.1999
(51) Int. Cl.: C08K 13/02, C08J 5/18, B32B 27/34

(54) **FLEXIBLE FOLIE MIT FEINSPHÄROLITHISCHER POLYAMIDSCHICHT, ENTHALTEND NANOSKALIGE, ANISOTROPE NUKLEIERUNGSMITTEL**
FLEXIBLE FILM PROVIDED WITH A FINE SPHERULITIC POLYAMIDE LAYER CONTAINING NANOSCALAR, ANISOTROPIC NUCLEATING AGENTS
FILM SOUPLE POURVU D'UNE COUCHE DE POLYAMIDE A SPHEROLITHES FINS CONTENANT DES AGENTS DE NUCLEATION NANOSCOPIQUES ANISOTROPES

(30) Priorität: 16.10.1998 DE 19847844; 16.10.1998 DE 19847845; 28.07.1999 DE 19935324; 06.08.1999 DE 19937117
(43) Veröffentlichungstag der Anmeldung: 12.09.2001
(73) Patentinhaber: Wipak Walsrode GmbH & Co. KG, 29656 Walsrode (DE)
(72) Erfinder: EGGERS, Holger, D-29664 Walsrode (DE); GASSE, Andreas, D-29664 Walsrode (DE); EILERS, Bernd, D-29699 Bomlitz (DE); KLEIN, Rudi, D-29664 Walsrode (DE); MÜLLER, Claudia, D-29664 Walsrode (DE); KASCHEL, Gregor, D-29664 Walsrode (DE); BRANDT, Rainer, D-29664 Walsrode (DE); NEUBAUER, Dieter, D-29699 Bomlitz (DE)
(74) Vertreter: Kutzenberger, Helga, Dr.
(86) Internationale Anmeldenummer: EP9907716
(87) Internationale Veröffentlichungsnummer: WO00023515

(56) Entgegenhaltungen:
- EP-A- 0 302 483
- EP-A- 0 358 415
- WO-A-88/02763
- WO-A-99/29767
- PATENT ABSTRACTS OF JAPAN vol. 003, no. 100 (C-056), 24. August 1979 (1979-08-24) & JP 54 080379 A (TORAY IND INC), 27. Juni 1979 (1979-06-27)
- CHEMICAL ABSTRACTS, vol. 1981, Columbus, Ohio, US; abstract no. 463126, GURATO, G.: "experimental methodology for studying heterogeneous nucleation" XP002129172 & ATTI CONV.-SC. CRIST. POLIM.,1979, Seiten 176-194,

## Beschreibung

Die vorliegende Erfindung betrifft eine flexible polyamidhaltige Folie mit wenigstens einer Schicht aus Polyamid, enthaltend nanoskalige, anisotrope, nukleierende Füllstoffe. Die Polyamidschicht zeichnet sich durch eine feinkristalline Sphärolithstruktur aus. Die erfindungsgemäße Folie weist neben einem hervorragenden optischen Erscheinungsbild eine hohe Steifigkeit bei guter Gleitfähigkeit und geringem Nachschrumpf auf. Die Erfindung umfaßt auch die Verwendung der Folie für die Herstellung von Verpackungen sowie die Verwendung insbesondere für die Verpackung von Lebensmitteln, für Bedruckung sowie Bedampfung mit Metall- oder Oxidschichten.

Polyamidhaltige Folien kommen in großem Umfang u.a. bei der Verpackung von Lebensmitteln zum Einsatz.

Vorteile des Werkstoffes Polyamid sind eine hohe mechanische Festigkeit, eine gute Barriere gegen Sauerstoff, Kohlendioxid und andere unpolare Gase sowie eine hohe Temperaturbeständigkeit und Kratzfestigkeit.

Eine für die Funktion der Folie in Verpackungsanwendungen geforderte zentrale Eigenschaft ist eine ansprechende Optik. Es ist ein hoher Glanz sowie eine geringe Trübung der polyamidhaltigen Folie gefordert.

Daneben ist in vielen Fällen eine hohe Steifigkeit bei niedrigen elastischen Deformationen notwendig. Diese ist Voraussetzung beispielsweise für einen schnellen und störungsfreien Lauf durch Verpackungsmaschinen üblicher Bauart. Beispielsweise führen hohe elastische Deformationen in der Siegelstation von Verpackungsmaschinen zur Entstehung von Falten in der Packung. Dies ist grundsätzlich unerwünscht. Die Funktionsweise entsprechender Maschinen ist dem Fachmann bekannt und beispielsweise in *The Wiley Encyclopedia of Packaging Technology* (Hrg. M.

Bakker, D. Eckroth; John Wiley & Sons, 1986) beschrieben. Als geeignetes Maß für die Steifigkeit einer Folie kann der E-Modul nach DIN EN ISO 527 herangezogen werden.

Für viele Anwendungen ist schließlich eine gute Gleitfähigkeit der polyamidhaltigen Folie gefordert. Dabei ist zwischen der Gleitfähigkeit der Folie auf einer gleichartigen Folienoberfläche sowie auf einer Metalloberfläche zu unterscheiden. Ein geeignetes Maß für die Gleitfähigkeit ist der Gleitreibkoeffizient nach DIN 53 375.

Polyamid ist ein teilkristallines thermoplastisches Polymer. Das sich in einer Folie einstellende Gefüge des Polyamid ist dabei in hohem Maße von den Verarbeitungsbedingungen sowie der Zusammensetzung des Polyamid abhängig.

Je langsamer die Abkühlgeschwindigkeit des Polyamids ist, desto größere kristalline Strukturen können sich durch eine Kristallisation herausbilden. Diese Strukturen stören um so mehr das optische Erscheinungsbild der Folie, je größer sie sind. Grobkristalline PA-Folien weisen daher eine unerwünscht hohe Trübung und einen ebenfalls unerwünscht niedrigen Glanz auf.

Bei einer schnellen Abkühlung aus der Schmelze hingegen ist durch die gegenüber anderen Thermoplasten wie beispielsweise Polyethylen verhältnismäßig langsame Kristallisation von Polyamid der größte Teil des Kristallisationsvorgangs in der Folie mit der Formgebung noch nicht abgeschlossen. Insbesondere in nicht nukleierten Systemen kann sich wegen der im Verhältnis zur Kristallisationsgeschwindigkeit zu schnellen Abkühlung ein metastabiler Zustand ergeben, der zu einer Nachkristallisation des Polyamids über einen längeren Zeitpunkt im Anschluß an die Herstellung führt. Durch die mit einer Kristallisation einhergehende Verringerung des spezifischen Volumens des Polyamids kommt es so zu einem Nachschrumpf einer solchen Folie auf der Rolle. Dies ist grundsätzlich unerwünscht. Wesentliche daraus erwachsende Nachteile sind eine schlechte Planlage der Folie aufgrund eines ungleichmäßigen Schrumpfes sowie eine mit wachsender Entfernung vom Rollenkern hin zunehmende Breitenabweichung der Folie. Die nicht auskristallisierte Folie läßt sich darüberhinaus wegen ihrer unzureichenden Festigkeit und hohen Klebeneigung nur schwer im Produktionsprozeß beherrschen.

Die Herstellung von Polyamidfolien kann nach dem Flach- oder dem Schlauchfolienverfahren erfolgen. Dabei bietet sowohl das Flach- als auch das Schlauchfolienverfahren die Möglichkeit, die Schmelze entweder sehr langsam oder sehr schnell abzukühlen. Im Falle des Schlauchfolienverfahrens kommt für sehr schnelle Abkühlungen in der Regel Wasser als Kühlmedium zum Einsatz.

Innerhalb der genannten Verfahren zur Herstellung von Folien sind auch solche Prozesse möglich, in denen die extrudierte Schmelze zunächst schroff abgekühlt wird, um dann in einem weiteren Schritt bei höherer Temperatur wieder nachgetempert zu werden. Vorteile solcher Verfahren sind die verbesserte Optik der PA-Folien sowie der aufgrund der Vorwegnahme in der Temperung geringe Nachschrumpf der Folie auf der Rolle. Daneben erhalten solche Folien mit der Nachkristallisation im Temperschritt eine höhere Festigkeit und eine bessere Gleitfähigkeit.

Auch dieses Verfahren ist sowohl im Flach- als auch im Schlauchfolienprozeß realisierbar. So kann im Flachfolienverfahren eine Nachtemperung auf einer der kalt eingestellten Gießwalze nachgeschalteten höher temperierten Walze erfolgen. Im Schlauchfolienprozeß kann eine Nachtemperung entweder in einer Flüssigkeit, vorzugsweise wiederum Wasser, oder in Luft erfolgen.

DE-A-3 308 296 offenbart ein Verfahren, nach dem ein zunächst schroff abgeschreckter Schlauch mit außenliegender Polyamidschicht einer Nachtemperung und Befeuchtung unterzogen werden kann. Der Schlauch ist daher besonders für die Verwendung als Wursthülle geeignet. Das hier zugrundeliegende Verfahren besteht in der Abschreckung in einem Wasserbad sowie in der anschließenden Temperung in einem zweiten Wasserbad, wodurch der Schlauch auch befeuchtet wird. Solche Systeme weisen als Vorteil eine höhere elastische Dehnbarkeit als konventionell erzeugte Strukturen auf. Dies ist aus oben genannten Gründen für die Anwendung als Verpackungsfolien jedoch nachteilig.

Daneben ist in vielen Fällen aus ökonomischen Gründen das Flachfolienverfahren gegenüber dem Schlauchfolienprozeß bevorzugt. So liegt die Ausstoßleistung von Flachfolienanlagen regelmäßig deutlich höher und die Fertigungskosten entsprechend niedriger als bei vergleichbaren Schlauchfolienanlagen.

Es ist ein Flachfolienprozeß Stand der Technik, bei dem ein Flachfilm mit dem Aufbau PP//PA6//PP oder PE//PA//PE zunächst über eine kalte Gießwalze abgeschreckt, um dann auf einer heißtemperierten Folgewalze nachkristallisiert zu werden. Eine Charakterisierung der PA-Schicht der so gewonnenen Folien mittels DSC zeigt, daß auf diese Weise die sonst bei schroffer Abschreckung übliche Nachkristallisation des PA vermieden werden kann. Entsprechend weisen die Folien auch keinen Nachschrumpf auf dem Wickel auf. Andere Eigenschaften der so hergestellten Folienverbunde werden nicht beschrieben.

Ein solches Verfahren erweist sich jedoch auf die typischerweise im Produktionsmaßstab herrschenden Bedingungen - eine rationelle und ökonomische Fertigung bedingt in der industriellen Praxis hohe Bahngeschwindigkeiten und Folienbreiten - als nicht übertragbar.

In der Regel sind auch reine Polyamidfolien und nicht symmetrische Folien mit dem Aufbau PP//PA//PP oder PE//PA//PE erwünscht. Das naheliegende Weglassen der polyolefinischen Außenschichten führt zwar auf reine Polyamidfolien, bringt jedoch erhebliche verfahrenstechnische Probleme mit sich, die in den folgenden Beispielen im Detail dargestellt sind. Grundsätzlich lassen sich jedoch die Polyamidfolien bei hohen Bahngeschwindigkeiten nicht plan von der kalt eingestellten Gießwalze ablösen. So weisen Flachfolien im Randbereich lokal höhere Dicken als in der Mitte auf. Dieser verdickte Rand wird im folgenden auch als Wulst bezeichnet. Im Wulstbereich wird die Folie in der Regel auch mit Druckluft auf der Gießwalze fixiert, so daß die Folienbreite während des gesamten Kontaktes mit der Gießwalze konstant bleibt. Aufgrund der geringen Wärmeleitfähigkeit von Polyamid und anderen Thermoplasten kommt es im Wulstbereich zu einer langsameren Abkühlung des Polyamid als in Folienmitte. Dadurch bildet sich in der Wulst ein anderes Gefüge als im dünneren Bereich in Folienmitte aus. In der Praxis führt dies bei kalten Gießwalzentemperaturen auf eine Verkürzung der Folienlängen im Wulstbereich. Aus diesem Grunde und wegen der geringen Festigkeit der amorphen Polyamidfolie in Bahnmitte läßt sich die Folie nicht plan von der Gießwalze abnehmen, sondern weist erhebliche Falten auf. Die Faltenbildung wiederum führt zu einem nicht über die gesamte Fläche durchgehenden Kontakt der Folie mit der nachfolgenden heißtemperierten Walze, so daß mit Abschluß der dort erfolgenden Nachkristallisation die fehlende Planlage der Folie irreversibel wird. Weitere Verarbeitungsschritte, wie beispielsweise eine Kaschierung, Bedruckung oder Wicklung, lassen sich mit einer solchen nicht planliegenden Folie nicht realisieren.

WO 98/05716 offenbart ein Verfahren, in dem eine Schlauch- oder Breitschlitzfolie zunächst auf Temperaturen von 0 bis 30°C abgekühlt und anschließend in einer zweiten Stufe auf Temperaturen von 50 bis 95°C erwärmt wird. Dabei enthält eine solche Folie ein Polyamid, das mit plättchenförmigen Füllstoffen, gekennzeichnet durch ein Verhältnis von Durchmesser zu Länge von 5:1 bis 100:1, bevorzugt Schichtsilikaten, insbesondere Glimmer, zwischen 0,1 und 15 Gew.-% gefüllt ist. Die Anwesenheit des Füllstoffes bewirkt hierbei insbesondere eine geringere Durchlässigkeit gegenüber Gasen sowie ein verbessertes Verarbeitungsverhalten bei einer anschließenden biaxialen Verstreckung der Folie. Beschriebene Füllstoffe wie der genannte Glimmer weisen Durchmesser von 0,1 bis 50 µm, bevorzugt 1 bis 20 µm auf. Der Einsatz solcher Füllstoffe erweist sich jedoch, wie im Zusammenhang mit den erfindungsgemäßen Beispielen und Vergleichsbeispielen erkennbar, nicht generell als vorteilhaft, um die oben beschriebenen Nachteile beim Flachfilmverfahren mit einer kalttemperierten Gießwalze und heißtemperierten Nachfolgewalze zu eliminieren. Zudem tragen genannte Füllstoffe durch ihre lichtstreuende Wirkung in erheblichem Maße zu einer Eintrübung der Folie bei.

Die Zugabe fester Partikel im Größenbereich von unterhalb eines Mikrometers in polymere Matrizen und speziell Polyamide ist ebenfalls seit längerem bekannt. Solche Systeme werden in Konzentrationen zwischen etwa 0,3 und 10 Gew.-% beschrieben. Als Vorteile ergeben sich bei höheren Anteilen erhöhte Steifigkeiten aufgrund der verstärkenden Wirkung der Füllstoffe sowie bei plättchenförmiger Struktur der verwendeten Füllstoffe auch eine höhere Sauerstoffbarriere aufgrund verlängerter Diffusionswege durch die polymere Matrix. Insbesondere kommen hier Schichtsilikate zum Einsatz, die im Gegensatz zu den in oben genannter Anmeldung WO 98/05716 Verwendung findenden Schichtsilikatsystemen durch geeignete Behandlung in lagenweise aufgeschlossener Form in die Polyamidmatrix eingebunden werden können.

EP-A-358 415 offenbart eine Folie aus einem Polyamidharz mit darin gleichmäßig dispergiertem Schichtsilikat, wobei die einzelnen Schichten des Schichtsilikats Dicken um 1 nm und Seitenlängen bis hinauf zu 1 µm aufweisen können. Die Schichten liegen in der Polyamidmatrix durch geeigneten Aufschluß separiert vor. Mit diesem Material in Konzentrationen zwischen 1,2 und 6,5 Gew.-% Schichtsilikat hergestellte Folien zeichnen sich gegenüber solchen aus reinem Polyamid 6 durch eine deutlich erhöhte Sauerstoffbarriere und Steifigkeit aus. Die Gleiteigenschaften werden verbessert. Die Transparenz von einschichtigen amorph abgeschreckten Flachfolien sowie Blasfolien mit Wasserkühlung mit dem Aufbau Polyamid//Haftvermittler//PE-LD bleibt gegenüber reinem Polyamid 6 unverändert. Anhand aufgeführter Beispiele von PA6-Folien mit abgestuftem Gehalt an Schichtsilikat wird die signifikante Zunahme der Steifigkeit bei gleichzeitiger Versprödung im Bereich bis 3,0 Gew.-% Silikat deutlich. Daher sind solche allgemeinen Aufbauten für die hier vorliegenden Anforderungen nicht geeignet.

WO 93/04118, sowie WO 93/11190 und WO 93/04117 jeweils desselben Anmelders, offenbaren Polymer-Nano-Komposits mit ebenfalls plättchenförmigen Partikeln im Dickenbereich von wenigen Nanometern, die nicht durch Einpolymerisation sondern durch mechanische Einarbeitung gewonnen werden. Insbesondere werden Komposite aus PA6 und Montmorillonit bzw. PA6 und Silikaten beschrieben mit zwischen 0,27 und 9 Gew.-% Füllstoffanteil. Messungen an Stäben aus entsprechendem Material ergeben bei einem Anteil von 0,27 % Silikat jedoch noch keine Erhöhung der Biegefestigkeit. Diese Materialien lassen sich ebenfalls zu Folien verarbeiten. Vorteilhaft ist in diesem Fall eine parallele Ausrichtung der plättchenförmigen Partikeln zur Folienoberfläche. Es werden Anwendungen als Monofolie sowie die Möglichkeit, Mehrschichtfolien herzustellen, beschrieben. Dabei können die aus diesem Material gefertigten Folien optional gereckt werden, um eine noch bessere Orientierung der Nanopartikeln zu erreichen. Hauptvorteil solcher Folien gegenüber solchen ohne nanoskalige Partikeln ist eine höhere Steifigkeit, die jedoch stets mit einer deutlich erhöhten Sprödigkeit einhergeht.

EP-A-818 508 offenbart eine Mischung aus 60-98% PA MXD6 mit 2 bis 40 % eines aliphatischen Polyamids, das wiederum inorganische Partikeln im Größenbereich von Nanometern enthält. Es werden Mischungen insbesondere mit PA 6 als aliphatischem Polyamid beschrieben. Daneben werden Mehrschichtfolien als daraus herstellbare Formteile beschrieben. Sämtliche genannten Aufbauten weisen als Vorteil eine hohe Sauerstoffbarriere auf, die auch durch eine Sterilisation nicht beeinträchtigt wird. Gegenüber einer Flachfolie aus reinem PA6 weist eine erfindungsgemäße Folie mit dem Aufbau PA 6//(80 % PA MXD6 + 20 % PA 6 mit Nanoteilchen)//PA 6 keine nennenswerte Verbesserung der Transparenz auf. Hauptnachteil solcher Strukturen mit einem hohen Anteil von PA MXD6 ist wiederum die erhöhte Sprödigkeit dieses Materials.

EP-A-810259 beschreibt ebenfalls eine Polyamidformmasse mit nanodispersen Füllstoffen. Durch Zugabe genügend feinteiliger Oxide, Oxihydrate oder Carbonate kann die dort gewünschte Barrierewirkung des Polyamid verbessert werden. Die Teilchen haben bevorzugt einen Durchmesser von weniger als 100 nm und werden in Konzentrationen von 0,1 bis 10 Gew.-%, bevorzugt zwischen 1 bis 3 Gew.-% eingesetzt. Es werden auch mehrschichtige Folien mit wenigstens einer Schicht aus dieser Formmasse zur Verbesserung der Sauerstoffsperre beschrieben. Die optischen Eigenschaften einer Folie aus einem mit 1 Gew.-% Silikat gefüllten Polyamid 6 verschlechtern sich jedoch gegenüber dem nicht additivierten System signifikant. Ebenso verschlechtert sich die Reißdehnung, und der Zugmodul verringert sich. Entsprechende Folien sind daher allgemein ebenfalls für den vorliegenden Anwendungsfall ungeeignet.

Es stellte sich angesichts des Standes der Technik die Aufgabe, eine flexible polyamidhaltige Folie bereitzustellen, die bei hervorragenden optischen Eigenschaften eine hohe Steifigkeit und gute Gleitfähigkeit aufweist. Sie soll auf üblichen Anlagen zur Herstellung von Folien, aus ökonomischen Gründen insbesondere auf Flachfolienanlagen, sicher und mit hohen Geschwindigkeiten herstellbar sein. Sie soll ferner im gewickelten Zustand nur einen minimalen, die Qualität des Wickels nicht beeinträchtigenden, Nachschrumpf aufweisen.

Erfindungsgemäß gelang dies durch Bereitstellung einer Folie mit wenigstens einer Schicht (I) aus im wesentlichen sphärolithisch kristallisiertem Polyamid enthaltend feste, anisotrope, nukleierende Füllstoffe (A), als dispergierte Bestandteile, dadurch gekennzeichnet, daß die Füllstoffe (A) in Schicht (I) im zahlengewichteten Mittel aller dispergierten Bestandteile der Füllstoffe (A) in wenigstens einer, für jeden dispergierten Bestandteil frei wählbaren Richtung (rI) eine Ausdehnung von nicht mehr als 10 nm aufweisen und die einzelnen Sphärolithe in Schicht (I) in wenigstens einer, zur Folienoberfläche senkrechten, Ebene einen Durchmesser von im zahlenmäßigen Mittel nicht über 1000 nm und nicht unter 100 nm aufweisen und der zahlenmäßig überwiegende Teil aller dispergierten Bestandteile der Füllstoffe (A) in Schicht (I) jeweils den Kristallisationskeim eines Sphärolithen darstellt.

Die Konzentration der Füllstoffe (A) in Schicht (I) liegt zwischen 0,01 und 1 Gew.-%, bezogen auf das Gesamtgewicht der Schicht (I).

Die erfindungsgemäße Folie kann zusätzlich zu Schicht (I) eine oder mehrere weitere polyamidhaltige Schichten enthalten. Bevorzugt ist eine solche Ausführung mit mehreren Schichten (I), die sich in der Zusammensetzung und/oder im Gefüge unterscheiden können.

Schicht (I) und gegebenenfalls vorhandene weitere polyamidhaltige Schichten können üblichen Additive enthalten.

Bevorzugt weisen die Füllstoffe in der frei wählbaren Richtung eine Ausdehnung von 0,1 bis 10 nm auf.

Bevorzugt ist eine Ausführung der erfindungsgemäßen Folie, in der Schicht (I) eine Außenschicht bildet. In einer solchen Ausführung enthält Schicht (I) bevorzugt als Antiblockmittel bekannte feste anorganische Partikel, die aus der Oberfläche der Schicht (I) hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 4 Gew.-%, vorzugsweise 1 bis 2 Gew.-%. Die mittlere Teilchengröße liegt zwischen 1 und 10 µm, bevorzugt 2 und 7 µm, wobei hier Teilchen mit kugelförmiger Gestalt besonders geeignet sind. Andere Additive, die die Gleitfähigkeit der Schicht (I), auch in Zusammenwirken mit den genannten festen, als Antiblockmittel bekannten. Partikeln verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere für Polyamid geeignetes aliphatisches Säureamid ist Ethylenbisstearylamid.

Schicht (I) sowie die gegebenenfalls vorhandenen weiteren polyamidhaltigen Schichten enthalten in bevorzugter Form neben Polyamid keine weiteren thermoplastischen Materialien. Das Schicht (I) sowie die gegebenenfalls vorhandenen weiteren polyamidhaltigen Schichten jeweils ausmachende Polyamid enthält in bevorzugter Form jeweils eine Mischung aus. verschiedenen Polyamiden mit wenigstens 90 Gew.-% Polyamid 6 oder ein Copolyamid mit wenigstens 90 Gew.-% aus ε-Caprolactam gebildeter Einheiten. Neben Polyamid 6 können Polyamide ausgewählt aus der Gruppe umfassend Polyamid 10, Polyamid 12, Polyamid 66, Polyamid 610, Polyamid 61, Polyamid 612, Polyamid 6/66, Polyamid 6I/6T, Polyamid MXD6, Polyamid 6/6I, Polyamid 6/6T, Polyamid 6/IPDI oder andere aliphatische oder aromatische Homo- und Copolyamide oder Mischungen daraus verwendet werden. Als besonders günstig erweist es sich in Schicht (I) sowie in den gegebenenfalls vorhandenen weiteren polyamidhaltigen Schichten, neben Polyamid 6 kein weiteres Polyamid zu verwenden.

Bevorzugt ist ein teilkristallines Gefüge der Schicht (I), dessen Kristallite zu einem möglichst hohen Anteil sphärolithischen Charakter aufweisen und von der Oberfläche der in Schicht (I) dispergierten anisotropen Partikeln ausgehen. Transkristalline Bereiche, die von der Oberfläche der in Schicht (I) dispergierten anisotropen Partikeln ausgehen und entstehen, wenn das Polyamid enthaltend die anisotropen. nukleierenden Füllstoffe, langsam abgekühlt wird, erweisen sich als für die Knickbruchfestigkeit ungünstig. Die sphärolithisch geformten Kristallite sollten dabei, um eine möglichst hohe Knickbruchfestigkeit der Folie zu gewährleisten, einen möglichst kleinen Durchmesser aufweisen. Andererseits ist ein möglichst großer Durchmesser für eine stabile Produktion der Folie bevorzugt. Eine insgesamt bevorzugte Sphärolithgröße ist durch eine mittleren Größe der Sphärolithe zwischen 100 und 1 000 nm gekennzeichnet. Aufgrund des anisotropen Charakters der Füllstoffe können die um sie herum gebildeten Sphärolithe selbst anisotrop sein.

Die erfindungsgemäße Folie kann zur Erleichterung der Heißsiegelbarkeit eine einschichtige oder mehrschichtige Siegelschicht, auf einer Außenseite der mehrschichtigen Folie enthalten. Die Siegelschicht bildet somit die dem Füllgut zugewandte Innenseite der Mehrschichtfolie. Die Siegelschicht enthält in bevorzugter Form die üblicherweise als Siegelmedium verwendeten Polymere oder Mischungen aus Polymeren aus der Gruppe umfassend Copolymerisate aus Ethylen und Vinylacetat (E/VA), besonders bevorzugt mit einem Vinylacetat-Gehalt, bezogen auf das Gesamtgewicht des Polymers, von höchstens 20%, Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15%, in noch weiter bevorzugter Form höchstens 8 %, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15%, in noch weiter bevorzugter Form höchstens 10%, Polyethylen niedriger Dichte (PE-LD), besonders bevorzugt in einer Dichte von wenigstens 0,91 g/cm³ und höchstens 0,935 g/cm³, Polyethylen hoher Dichte (PE-HD), Copolymerisate (PE-LLD) aus Ethylen und α-Olefinen mit wenigstens 3 C-Atomen, beispielsweise Buten, Hexen, Octen, 4-Methyl-1-Penten. Die Copolymerisate (PE-LLD) aus Ethylen und □-Olefinen können mit konventionellen Katalysatoren oder mit Metallocen-Katalysatoren hergestellt sein. Besonders bevorzugt sind daraus Copolymerisate (PE-LLD) aus Ethylen und α-Olefinen mit einer Dichte von wenigstens 0,90 g/cm³ und höchstens 0,94 g/cm³.

Die erfindungsgemäße Mehrschichtfolie kann zusätzlich zu Schicht (I) sowie den gegebenenfalls vorhandenen weiteren polyamidhaltigen Schichten und gegebenenfalls zur Siegelschicht auch eine oder mehrere EVOH-haltige Schichten zur Verbesserung der Sauerstoffsperreigenschaften enthalten, wobei die EVOH-haltigen Schichten bevorzugt wenigstens 50 Gew.-%, bezogen auf das Gesamtgewicht der jeweiligen EVOH-haltigen Schicht, eines EVOH mit wenigstens 85 und höchstens 40 Mol-% Vinylacetat, das zu wenigstens 90 % verseift ist, enthalten. In einer besonders bevorzugten Form ist eine EVOH-haltige Schicht zwischen zwei polyamidhaltigen Schichten plaziert.

Die erfindungsgemäße Folie kann zusätzlich zu Schicht (I) sowie den gegebenenfalls vorhandenen weiteren polyamidhaltigen Schichten, der Siegelschicht und/oder einer oder mehreren EVOH-haltigen Schicht(en) eine oder mehrere haftvermittelnde Schichten enthalten. Eine solche haftvermittelnde Schicht ist bevorzugt ein Kaschierklebstoff auf Basis von Polyurethanen oder Polyesterurethanen oder ein extrudierbarer Haftvermittler.

Zusätzlich zu Schicht (I) sowie den gegebenenfalls vorhandenen weiteren polyamidhaitigen Schichten, der Siegelschicht, einer oder mehreren EVOH-haltigen Schicht(en) und/oder einer oder mehrerer haftvermittelnder Schicht(en) kann die erfindungsgemäße Mehrschichtfolie noch weitere polymere Schichten enthalten.

Die erfindungsgemäße Mehrschichtfolie läßt sich bevorzugt auf Flachfolienanlagen herstellen. Dabei besteht die Möglichkeit, alle oder einen Teil der Schichten gemeinsam zu coextrudieren, d.h. die Polymere dieser Schichten als Schmelzeströme zusammenzuführen und in geschmolzener Form durch eine gemeinsame Düse strömen zu lassen.

Günstig ist die Herstellung der Schichten (I) sowie gegebenenfalls vorhandener weiterer polyamidhaltiger Schichten als Flachfolie. Es können daneben weitere Schichten, insbesondere die EVOH-haltigen Schichten, in Coextrusion mit Schicht (I) sowie gegebenenfalls vorhandener weiterer polyamidhaltiger Schichten hergestellt werden.

Um das Gefüge von Schicht (I) der erfindungsgemäßen Folie zu erhalten, muß die diese Schicht enthaltende Schmelze nach der Extrusion zunächst rasch abgekühlt und anschließend bei höheren Temperaturen getempert werden.

Dies kann beim Flachfolienverfahren durch genügend tiefe Gießwalzentemperaturen, bevorzugt sind Temperaturen unter 80°C, erreicht werden. Dabei sollten Verweilzeiten von wenigstens 0,1 Sekunden eingehalten werden. Nach der Abschreckung erfolgt die Temperung bevorzugt auf einer weiteren Walze. Hier werden Temperaturen von wenigstens 90°C bevorzugt, besonders günstig sind Temperaturen von wenigstens 100°C. Dabei sind Verweilzeiten von wenigstens 0,05 Sekunden, bevorzugt 0,1 Sekunden günstig. Besonders bevorzugt ist ferner eine chemische oder mechanische Modifikation der Oberfläche der Temperierwalze in der Art, daß die Adhäsion der Folie auf der Temperierwalze bei hohen Temperaturen verringert wird.

Das zur Erzielung des Gefüges erforderliche Temperaturprofil kann beim Schlauchfolienprozeß durch eine Abkühlung in einem Flüssigkeitsbad oder in Kontakt mit flüssigkeitsbenetzten Oberflächen oder in Kontakt mit fließenden Flüssigkeiten erreicht werden. Bevorzugt wird als Temperierflüssigkeit Wasser verwendet. Günstig sind Temperaturen der Flüssigkeit unter 35°C. Dabei sollten Verweilzeiten von wenigstens 0,2 Sekunden eingehalten werden. Nach der Abschreckung erfolgt die Temperung bevorzugt auf einer weiteren Walze oder in Luft oder in einem Flüssigkeitsbad oder in Kontakt mit flüssigkeitsbenetzten Oberflächen oder in Kontakt mit fließenden Flüssigkeiten. Hier werden Temperaturen von wenigstens 60°C bevorzugt, besonders günstig sind Temperaturen von wenigstens 85°C. Dabei sind Verweilzeiten von wenigstens 0,2 Sekunden günstig.

Die erfindungsgemäße Mehrschichtfolie kann auch nach der Extrusion einem Reckvorgang unterzogen werden. Die Orientierung kann nur in Längsrichtung, nur in Querrichtung, zuerst in Längs- und anschließend in Querrichtung, simultan in Längsund Querrichtung oder in Kombinationen aus diesen Schritten erfolgen. Dabei kann die Reckung für die gesamte Mehrschichtfolie oder für Teilverbunde daraus, insbesondere Schicht (I) enthaltende Teilverbunde, durchgeführt werden.

Die erfindungsgemäße Mehrschichtfolie kann auf der Außenseite oder zwischen zwei inneren Schichten mit einer Schicht aus einem Metall, bevorzugt Aluminium, einem Oxid eines Metalls oder eines Nichtmetalls, bevorzugt einem Oxid des Silizium, Eisen oder Aluminium, versehen werden. Diese Schicht weist vorzugsweise eine Dicke von 5 bis 200 nm auf. Bevorzugt ist wegen der glatten Oberfläche dieser Schichten eine Beschichtung auf einer Schicht (I), insbesondere in der Form, daß die Beschichtung nicht auf der Außenseite der Schicht (I) liegt. Günstig ist bei kaschierten Verbunden eine Beschichtung auf der dem Kaschierkleber unmittelbar zugewandten Seite einer Schicht (I).

Die erfindungsgemäße Folie kann auch auf der Außenseite, der Innenseite oder zwischen einzelnen Schichten bedruckt sein. Bevorzugt ist eine Bedruckung auf einer Schicht (I), insbesondere in der Form, daß die Beschichtung nicht auf der Außenseite der Schicht (I) liegt. Günstig ist bei kaschierten Verbunden eine Beschichtung auf der dem Kaschierkleber unmittelbar zugewandten Seite einer Schicht (I).

Überraschend wurde gefunden, daß die erfindungsgemäße Folie neben dem hervorragenden optischen Erscheinungsbild eine sehr hohe Steifigkeit bei guter Gleitfähigkeit erreicht.

Die erfindungsgemäße Folie weist zusätzlich eine sehr gute Planlage und hohe Dimensionsstabilität auf. Neben einer guten Wickelbarkeit kann sie damit in-line oder in getrennten Arbeitsgängen einem weiteren Verarbeitungsschritt wie einer Laminierung, einer Beschichtung oder einer Bedruckung unterzogen werden.

Durch die unerwartet hohen erreichbaren Produktionsgeschwindigkeiten ist eine optimale Ausnutzung betrieblicher Ressourcen möglich.

Überraschend war ferner die Tatsache, daß schon der Einsatz geringer Mengen eines nanodispersen, anisotropen, nukleierenden Füllstoffs die guten produktionstechnischen Eigenschaften ermöglicht. Entsprechende Zugabemengen führen weder bei konventionellen anisotropen Füllstoffsystemen wie Glasfasern oder Glimmer noch bei den verwendeten nanoskaligen Füllstoffen auf eine signifikante Erhöhung der Steifigkeit sie enthaltender Polyamide. Höhere Zugabemengen der nanodispersen Füllstoffe hingegen bewirken eine Versprödung der Folie. Zusätzlich erzeugen sie im Flachfolienverfahren eine Wellenbildung der Folie auf der Gießwalze und lassen somit keine qualitativ verwertbare Produktion zu.

Die erfindungsgemäße Folie erweist sich als überraschend brillant bedruckbar und gut mit Barriereschichten bedampfbar.

Die erfindungsgemäße Folie ist mit dem erreichten Eigenschaftsbild im Verbund mit einer Siegelschicht insbesondere für Verpackungszwecke geeignet. Zusätzlich erweist sich die erfindungsgemäße Folie als überraschend gut tiefziehbar.

Ein weiterer Gegenstand der Erfindung ist daher auch die Verwendung der Folie zur Herstellung von Verpackungsmaterial, insbesondere zur Herstellung tiefgezogener Lebensmittelcontainer.

### Beispiele

An den erfindungsgemäßen Beispielen und den Vergleichsbeispielen wurden die folgenden Eigenschaften wie folgt bestimmt:
- der E-Modul nach DIN EN ISO 527 bei einer Temperatur von 23°C und einer relativen Feuchte von 50 %. Dabei wurde das Muster einer Folienrolle entnommen und 48 Stunden vor der Messung im Meßklima konditioniert.
- Die Trübung nach ASTM D 1003.
- Der Glanz auf der Außenseite der Folie unter einem Winkel von 20° nach DIN 67530.
- Das Reibungsverhalten nach DIN 53 375. Gemessen werden die Reibkoeffizienten für die Gleitreibung zwischen Folie und Folie. Die Messung wurde bei 23°C durchgeführt.
- Trans-Elektronenmikroskopische Untersuchung eines Querschnitts der Folie. Dazu wurde aus der PA-Außenschicht der Folie ein Dünnschnitt in Querrichtung entnommen und mit Formalin und OsO₄ kontrastiert. Es wurde anhand eines Ausdrucks mit der Vergrößerung 15000:1 das Gefüge wie folgt charakterisiert:
   - liegt ein im wesentlichen sphärolithisches Kristallgefüge vor?
   - stellt der zahlenmäßig überwiegende Teil aller dispergierten Bestandteile der Füllstoffe in der PA-Außenschicht den Kristallisationskeim eines Sphärolithen dar?
   - mittlere zahlengewichtete Größe der Sphärolithe bei vorliegendem im wesentlichen sphärolithischem Gefüge
- Die Produzierbarkeit als Flachfolie unter den genannten Bedingungen. Es wurde insbesondere die Stabilität und Planlage der Folie bewertet. Dabei bedeutet Stabilität die Fähigkeit der Folie, durch die Anlage ohne Verkleben und Überdehnung führbar und insbesondere wickelbar zu sein. Planlage bedeutet die Abwesenheit von Falten und lokalen Überdehnungen, die in der Regel wie oben beschrieben beim Verlassen der Gießwalze entstehen und auf der Temperierwalze eingeprägt werden. Zusätzlich wurde die Beobachtung gemacht, daß hochgefüllte Folien auf der Gießwalze eine unerwünschte Wellenstruktur bilden. Deren Auftreten führte zu einer negativen Beurteilung. Die Ergebnisse wurden gegebenenfalls differenziert nach Planlage, Stabilität und Wellenbildung in die Kategorien ++ (sehr gut), + (gut), - (schlecht) eingeteilt.
- Nachschrumpf auf der Rolle nach zweiwöchiger Lagerung bei 15 bis 20°C und 40 bis 70 % relativer Feuchte. Es wurde eine visuelle Beurteilung nach Abweichungen von der Zylindrizität der Rolle hin zu einer unregelmäßigen Oberfläche wie folgt vorgenommen:
   ++ ohne erkennbaren Nachschrumpf, zylinderförmige Rolle
   + leichter Nachschrumpf erkennbar
   - deutlicher Nachschrumpf erkennbar
   -- starker Nachschrumpf erkennbar

### Versuchsreihe 1:

Es wurden einschichtige Flachfolien aus Polyamid 6 mit einer Dicke von 30 µm auf einer Flachfolienanlage üblicher Bauart gefertigt. Die Gießwalze hat eine Umfangsgeschwindigkeit von 100 m/min. Die Verweilzeit der Folie auf der Gießwalze betrug 0,5 Sekunden. Die Verweilzeit auf der Temperierwalze im unmittelbaren Anschluß an die Gießwalze betrug 0,2 Sekunden. Die Breite der Folien betrug 1200 mm. Das verwendete Polyamid 6 enthält 600 ppm Ethylen-Bisstearylamid und ca. 150 ppm Talkum als Nukleierungsmittel. Es weist eine relative Lösungsviskosität von 3,8 in m-Kresol auf. Innerhalb der Versuchsreihe wurden die Temperaturen der Walzen variiert. Es wurden die optischen Eigenschaften, die Steifigkeit, der Nachschrumpf sowie die Produzierbarkeit bewertet. Keine der Einstellungen wird der gestellten Aufgabe gerecht.

In Vergleichsbeispiel 1.1 (V1.1) betrug die Gießwalzentemperatur 120°C und die Temperierwalzentemperatur 80°C.
In Vergleichsbeispiel 1.2 (V1.2) betrug die Gießwalzentemperatur 40°C und die Temperierwalzentemperatur 40°C.
In Vergleichsbeispiel 1.3 (V1.3) betrug die Gießwalzentemperatur 70°C und die Temperierwalzentemperatur 120°C.
Die Ergebnisse für Versuchsreihe 1 sind in untenstehender Tabelle zusammengefaßt:

| Merkmal (Einheit) | Beispiel (B) oder Vergleichsbeispiel (V) PA6, 30 µm | | |
|---|---|---|---|
| | V1.1 | V1.2 | V1.3 |
| Temperatur Gießwalze (°C) / Temperatur Kühlwalze (°C) | 120/80 | 40/40 | 70/120 |
| Sphärolithisches Gefüge? | ja | ja | ja |
| Mittlere Sphärolithgröße (nm) | ca. 1500 | ca. 10 | ca. 300 |
| Glanz (Glanzeinheiten) | 121 | 155 | 166 |
| Trübung (%) | 7,4 | 0,6 | 1,7 |
| Modul (MPa) | 1740 | 801 | 1216 |
| Gleitreibkoeffizient Folie gegen Folie (-) | 0,32 | 2,2 | 0,67 |
| Nachschrumpf (%) | ++ | -- | + |
| Produzierbarkeit (Planlage) | ++ | - | - |
| Produzierbarkeit (Stabilität) | ++ | - | + |

Je nach Temperaturführung der Walzen ist die Folie aus ungefülltem PA6 entweder in den optischen Eigenschaften unbefriedigend oder weist Unzulänglichkeiten in der Produzierbarkeit und Gleitfähigkeit auf. Dabei ergeben sich bei kalter Gießwalze hinsichtlich der Bahnstabilität Vorteile durch eine Nachtemperung. Die Probleme mit der Planlage lassen sich jedoch nicht eliminieren.

### Versuchsreihe 2:

Es wurden Flachfolien unter den Bedingungen von Vergleichsbeispiel 1.3. gefertigt. Als Polyamid wurde Polyamid 6, gefüllt mit 2 Gew.-% eines anorganischen, anisotropen Füllstoffs, verwendet.

In Vergleichsbeispiel 2.1. wurde als Füllstoff plättchenförmiger Glimmer mit einem mittleren Partikeldurchmesser von 25 µm und einer mittleren Dicke von 0,5 µm verwendet. Der Glimmer wurde in einem Zweischneckenextruder im Polyamid dispergiert, das Extrudat anschließend granuliert, mit ungefülltem Polyamid 6 abgemischt und wie in Vergleichsbeispiel 1.3. zu einer Flachfolie verarbeitet.

In Vergleichsbeispiel 2.2. wurde ein Polyamid 6 mit einer relativen Lösungsviskosität von 3,6 in m-Kresol enthaltend 2 Gewichts-% nanoskalig in Plättchenform dispergiertes Schichtsilikat (Montmorillonit) verwendet. Die Montmorillonitpartikeln weisen Dicken von ca. 1 nm und Durchmesser von 100 bis 1000 nm auf.

Es wurden wiederum nur die optischen Eigenschaften, der Nachschrumpf sowie die Produzierbarkeit bewertet. Es stellte sich wie in Versuchsreihe 1 heraus, daß keine der Einstellungen der gestellten Aufgabe gerecht wurde.

Die Ergebnisse für Versuchsreihe 2 sind in untenstehender Tabelle zusammengefaßt:

| Merkmal (Einheit) | Beispiel (B) oder Vergleichsbeispiel (V) PA6, 30 µm, Gießwalze = 70°C, Kühlwalze = 120°C | |
|---|---|---|
| | V2.1 | V2.2 |
| Füllstoff | 2 % Glimmer | 2 % Montmorillonit |
| Sphärolithisches Gefüge? | ja | ja |
| Sind Füllstoffe überwiegend Kristallisationskeime ? | nein | ja |
| Mittlere Sphärolithgröße (nm) | ca. 300 | ca. 300 |
| Glanz (Glanzeinheiten) | 99 | nicht meßbar, da wellig |
| Trübung (%) | 8,3 | 2,1 |
| Modul (MPa) | 1319 | 2159 |
| Gleitreibkoeffizient Folie gegen Folie (-) | 0,29 | 0,43 |
| Nachschrumpf (%) | + | nicht meßbar, da wellig |
| Produzierbarkeit (Planlage) | - | -- (wellig) |
| Produzierbarkeit (Stabilität) | + | ++ |

Glimmer zeigt danach keine die Planlage verbessernden Eigenschaften, die Folie trübt jedoch stark ein und verliert an Glanz. Es wird jedoch die Gleitfähigkeit verbessert. Die 2% Montmorillonit enthaltende Folie läßt sich aufgrund starker Wellenbildung auf der Gießwalze nicht verarbeiten und vollständig charakterisieren. Die Steifigkeit ist jedoch merklich erhöht. Sie erweist sich in Summe als unbrauchbar.

### Versuchsreihe 3:

Zum Vergleich wurden die Materialien aus Versuchsreihe 2 unter den Bedingungen wie in Vergleichsbeispiel 1.2, d.h. ohne Nachtemperung, zu Folien verarbeitet. Dabei wurden die selben Eigenschaften wie in Versuchsreihe 2 untersucht.

Die Ergebnisse für Versuchsreihe 3 sind in untenstehender Tabelle zusammengefaßt:

| Merkmal (Einheit) | Beispiel (B) oder Vergleichsbeispiel (V) PA6, 30 µm, Gießwalze = 40°C, Kühlwalze = 40°C | |
|---|---|---|
| | V3.1 | V3.2 |
| Füllstoff | 2 % Glimmer | 2 % Montmorillonit |
| Sphärolithisches Gefüge? | ja | ja |
| Sind Füllstoffe überwiegend Kristallisationskeime ? | nein | nein |
| Mittlere Sphärolithgröße (nm) | ca. 10 | ca. 10 |
| Glanz (Glanzeinheiten) | 104 | nicht meßbar, da wellig |
| Trübung (%) | 7,9 | 2,0 |
| Modul (MPa) | 813 | 1498 |
| Gleitreibkoeffizient Folie gegen Folie (-) | 1,03 | 1,42 |
| Nachschrumpf (%) | -- | nicht meßbar, da wellig |
| Produzierbarkeit (Planlage) | - | -- (wellig) |
| Produzierbarkeit (Stabilität) | - | + |

Auch bei einer Produktionsweise ohne Nachtemperung erbringt die Zugabe von Glimmer keine Vorteile bezüglich Steifigkeit und Produzierbarkeit gegenüber ungefülltem Polyamid 6. Es entstehen lediglich Nachteile in optischer Hinsicht. Die 2 % Montmorillonit enthaltende Folie läßt sich wiederum aufgrund starker Wellenbildung auf der Gießwalze nicht verarbeiten und vollständig charakterisieren. Sie erweist sich damit trotz der hohen Steifigkeit und guten Transparenz als unbrauchbar. Die Bahnstabilität ist gegenüber Vergleichsbeispiel 2.2 mit Nachtemperung geringer, aber noch akzeptabel.

### Versuchsreihe 4:

Es wurde unter den Bedingungen wie in Vergleichsbeispiel 1.2., d.h. mit kalter Gießund Temperierwalze, der Versuch unternommen, durch eine Verringerung des Gehalts an Montmorillonit das Problem der Wellenbildung zu eliminieren. Dazu wurde das 2 % Montmorillonit enthaltende Polyamid 6 aus Vergleichsbeispiel 2.2 mit dem ungefüllten Polyamid 6 aus Vergleichsbeispiel 1.1 so abgemischt, daß sich in der Mischung Anteile des Montmorillonit von 0,2 und 1,0 Gew.-% ergeben. Die Charakterisierung der Folie ergab das in nachstehender Tabelle aufgeführte Ergebnis:

| Merkmal (Einheit) | Beispiel (B) oder Vergleichsbeispiel (V) PA6, 30 µm, Gießwalze = 40°C, Kühlwalze = 40°C | |
|---|---|---|
| | V4.1 | V3.2 |
| Füllstoff | 0,2 % Montmorillonit | 1,0 % Montmorillonit |
| Sphärolithisches Gefüge? | ja | ja |
| Sind Füllstoffe überwiegend Kristallisationskeime ? | nein | nein |
| Mittlere Sphärolithgröße (nm) | ca. 10 | ca. 10 |
| Glanz (Glanzeinheiten) | 163 | 157 |
| Trübung (%) | 1,2 | 1,8 |
| Modul (MPa) | 926 | 1175 |
| Gleitreibkoeffizient Folie gegen Folie (-) | 2,02 | 1,95 |
| Nachschrumpf (%) | - | - |
| Produzierbarkeit (Planlage) | - | - |
| Produzierbarkeit (Stabilität) | - | - |

Die mit einer Produktionsweise ohne Nachtemperung gefertigten Folien mit abgesenktem Gehalt an Montmorillonit zeigen zwar keine Wellenbildung auf der Gießwalze, jedoch nimmt die Stabilität der Folie sowie deren Steifigkeit und Planlage ab. Die Folien sind nicht gut gleitfähig. Zusätzlich kommt es zum Nachschrumpf auf dem Wickel. Entsprechende Folien werden damit der gestellten Aufgabe ebenfalls nicht gerecht.

### Versuchsreihe 5:

Folien mit abgestuften Gehalt an Montmorillonit wurden unter den Bedingungen wie in Vergleichsbeispiel 1.3, d.h. mit kalter Gießwalze und anschließender Nachtemperierung auf der Temperierwalze, gefertigt. Dazu wurde auf die gleiche Weise wie in Versuchsreihe 4 der gehalt an Montmorillonit variiert. Es wurden Anteile von 0,05 Gew.-%, 0,2 Gew.-%, und 1 Gew.-% eingestellt. Zusätzlich wurden 1000 ppm eines Kaolin mit einer Partikelgröße von ca. 2 µm als Antiblockmittel hinzugesetzt. Zum Vergleich sind auch die Vergleichsbeispiele 1.3 und 2.2 mit 0 Gew.-% bzw. 2,0 Gew.-%, jedoch ohne Antiblock, aufgeführt. Die Charakterisierung der Folien ergab das in nachstehender Tabelle aufgeführte Ergebnis:

| Merkmal (Einheit) | Beispiel (B) oder Vergleichsbeispiel (V) PA6, 30 µm, gefüllt mit Montmorillonit Gießwalze = 70°C, Kühlwalze = 120°C | | | | |
|---|---|---|---|---|---|
| | V1.3 | B5.1 | B5.2 | B5.3 | V2.2 |
| Gewichtsanteil Montmorillonit | 0 % | 0,05 % | 0,2 % | 1,0 % | 2,0 % |
| Sphärolithisches Gefüge? | ja | ja | ja | ja | ja |
| Sind Füllstoffe überwiegend Kristallisationskeime ? | ja | ja | ja | ja | ja |
| Mittlere Sphärolithgröße (nm) | ca. 300 | ca. 300 | ca. 300 | ca. 300 | ca. 300 |
| Glanz (Glanzeinheiten) | 166 | 157 | 162 | 168 | * |
| Trübung (%) | 1,7 | 1,8 | 1,6 | 2,0 | 2,1 |
| Modul (MPa) | 1216 | 1456 | 1650 | 1803 | 2159 |
| Gleitreibkoeffizient Folie gegen Folie (-) | 0,67 | 0,42 | 0,45 | 0,39 | * |
| Nachschrumpf (%) | + | ++ | ++ | ++ | ++ |
| Produzierbarkeit (Planlage) | - | + | ++ | ++ | -- (wellig) |
| Produzierbarkeit (Stabilität) | + | ++ | ++ | ++ | ++ |

| | | | | | |
|---|---|---|---|---|---|
| * nicht meßbar wegen Wellen | | | | | |

Die erfindungsgemäßen Beispiele 5.1 bis 5.3 erweisen sich in allen Punkten als der gestellten Aufgabe entsprechend.

## Patentansprüche

1. Folie mit wenigstens einer Schicht (I) aus im wesentlichen sphärolithisch kristallisiertem Polyamid enthaltend feste, anisotrope, nukleierende Füllstoffe (A) als dispergierte Bestandteile, **dadurch gekennzeichnet, daß** die Füllstoffe (A) in einer Menge zwischen 0,01 und 1 Gew.-%, bezogen auf das Gesamtgewicht der Schicht (I) vorliegen und in Schicht (I) im zahlengewichteten Mittel aller dispergierten Bestandteile der Füllstoffe (A) in wenigstens einer, für jeden dispergierten Bestandteil frei wählbaren Richtung (r1) eine Ausdehnung von nicht mehr als 10 nm aufweisen und die einzelnen Sphärolithe in Schicht (I) in wenigstens einer, zur Folienoberfläche senkrechten, Ebene einen Durchmesser von im zahlenmäßigen Mittel nicht über 1000 nm und nicht unter 100 nm aufweisen und der zahlenmäßig überwiegende Teil dispergierten Bestandteile der Füllstoffe (A) in Schicht (I) jeweils den Kristallisationskeim eines Sphärolithen darstellt.

2. Folie nach Anspruch 1, **dadurch gekennzeichnet, daß** sie eine oder mehrere weitere polyamidhaltige Schichten enthält.

3. Folie nach Anspruch 1, **dadurch gekennzeichnet, daß** eine oder mehrere Schichten (I) und/oder eine oder mehrere weitere polyamidhaltige Schichten Polyamid enthalten, das zu wenigstens 90 Gewichtsprozent aus ε-Caprolactam gebildet ist.

4. Folie nach einem der vorherigen Ansprüche, **dadurch gekennzeichnet, daß** die einzelnen Sphärolithe in wenigstens einer Schicht (I) anisotrop sind.

5. Folie nach einem der vorherigen Ansprüche, **dadurch gekennzeichnet, daß** die Schicht (I) die Außenschicht der Folie bildet.

6. Folie nach einem der vorherigen Ansprüche, **dadurch gekennzeichnet, daß** eine Außenseite der mehrschichtigen Folie eine einschichtige oder mehrschichtige Siegelschicht ist.

7. Folie nach einem der vorherigen Ansprüche, **dadurch gekennzeichnet, daß** sie wenigstens eine EVOH-haltige Schicht enthält.

8. Folie nach einem der vorherigen Ansprüche, **dadurch gekennzeichnet, daß** sie eine oder mehrere weitere polymere Schicht(en) und/oder zwischen zwei Schichten oder auf der Außenseite eine Schicht aus einem Metall, bevorzugt Aluminium, oder einem Oxid eines Metalls oder eines Nichtmetalls und/oder eine Bedruckung aufweist.

9. Folie nach einem der vorherigen Ansprüche, **dadurch gekennzeichnet, daß** die gesamte Mehrschichtfolie oder nur Teilverbunde, vorzugsweise enthaltend Schicht (I), längs und/oder quer orientiert sind.

10. Verfahren zur Herstellung einer Folie mit wenigstens einer Schicht (I) aus im wesentlich spärolitisch kristallisiertem Polyamid enthaltend feste anisorope, nukleierende Füllstoffe gemäß einem der vorherigen Ansprüche nach dem Flachfolienverfahren durch
(1) Aufschmelzen der Polymere und Ausformung der Polymerschmelze über eine Breitschlitzdüse
(2) Abkühlung der Polymerschmelze und Erstarrung zu einer festen Folie auf einer rotierenden Walze, die eine Temperatur von höchstens 80 °C aufweist, für wenigstens 0,1 Sekunden
(3) Erwärmung der Folie auf einer rotierenden Walze, die eine Temperatur von wenigstens 90 °C aufweist, für wenigstens 0,05 Sekunden und
(4) gegebenenfalls einer Orientierung der Folie in Längsrichtung und/oder Querrichtung nach der Extrusion.

11. Verwendung einer Folie nach einem der vorherigen Ansprüche 1 bis 9 zur Herstellung eines Verpackungsmaterials, vorzugsweise von Containern auf Form-Füll-Siegel-Maschinen.

12. Verwendung einer Folie nach einem der vorherigen Ansprüche 1 bis 9 zur Verpackung von Lebensmitteln.

## Claims

1. Film with at least one layer (1) essentially comprising spherulitically crystallised polyamide containing solid anisotropic nucleating fillers (A) as dispersed components, **characterised in that** the fillers (A) are present in a quantity of between 0.01 and 1 percent by weight relative to the overall weight of the layer (1), and in layer (1) the number-weighted mean of all dispersed components of the fillers (A) have in at least one freely selectable direction (r1) for each dispersed component an expansion of not more than 10 nm and the individual spherulites in layer (1) have in at least one plane perpendicular to the surface of the film a diameter of not more than 1000 nm and not less than 100 nm in the numerical mean and the numerically predominant part of dispersed components of the fillers (A) in layer (1) in each case represents the crystal nucleus of a spherulite.

2. Film according to claim 1, **characterised in that** it contains one or more further polyamide-containing layers.

3. Film according to claim 1, **characterised in that** one or more layers (1) and/or one or more further polyamide-containing layers contain polyamide of which at least 90 weight percent is formed from ε-caprolactam.

4. Film according to one of the previous claims, **characterised in that** the individual spherulites are anisotropic in at least one layer (1).

5. Film according to one of the previous claims, **characterised in that** the layer (1) forms the outer layer of the film.

6. Film according to one of the previous claims, **characterised in that** one external side of the multilayer film is a single-layer or multi-layer sealing layer.

7. Film according to one of the previous claims, **characterised in that** it contains at least one EVOH-containing layer.

8. Film according to one of the previous claims, **characterised in that** it has one or more further polymer layer(s) and/or between two layers or on the external side a layer comprising a metal, preferably aluminium, or an oxide of a metal or a non-metal and/or printing.

9. Film according to one of the previous claims, **characterised in that** the entire multi-layer film or only partial composites, preferably containing layer (1), are longitudinally and/or transversely orientated.

10. Method for the production of a film with at least one layer (1) comprising essentially spherulitically crystallised polyamide containing solid anisotropic nucleating fillers in accordance with one of the previous claims in accordance with the flat film process by
(1) melting the polymers and extruding the polymer melt via a wide slit die
(2) cooling the polymer melts and solidifying to a solid film on a rotating roll which has a maximum temperature of 80 °C for at least 0.1 seconds
(3) heating of the film on a rotating roll which has a temperature of at least 90 °C for at least 0.05 seconds and
(4) optionally an orientation of the film in the longitudinal direction and/or transverse direction after extrusion.

11. Use of a film according to one of the previous claims 1 to 9 for the production of a packaging material, preferably containers, on form-fill-seal machines.

12. Use of a film according to one of the previous claims 1 to 9 for packaging foodstuffs.

## Revendications

1. Film avec au moins une couche (1) en polyamide cristallisé de façon sphérolitique, comprenant des matières de remplissage (A) solides , anisotropes et à nucléation (A) en tant que composants dispersés , **caractérisé en ce que** des matières de remplissage (A) sont présentes dans une quantité située entre 0,01 et 1% en poids par rapport au poids total de la couche I et **en ce que** les matières de remplissage présentent dans la couche (I), pour la moyenne pondérée chiffrée de tous les composants dispersés des matières de remplissage (A) au moins dans une direction (r1), qui peut être choisie librement, pour chaque composant dispersé, une extension n'excédant pas plus de 10 nm et **en ce que** les sphérolithes individuels présentent dans la couche (I), au moins dans un plan perpendiculaire par rapport à la feuille, un diamètre n'excédant pas plus de 1000nm et ne présentant pas moins de 100nm dans la moyenne chiffrée, et **en ce que** la partie la plus grande en chiffres des composants dispersés des matières de remplissage (A) représente, à chaque fois, le germe de cristallisation d'un sphérolithe.

2. Film selon la revendication 1, **caractérisé en ce qu'**il comprend une ou plusieurs couches supplémentaires contenant du polyamide.

3. Film selon la revendication 1, **caractérisé en ce qu'**une ou plusieurs couches et / ou une ou plusieurs couches supplémentaires contenant du polyamide contiennent du polyamide, lequel polyamide est formé d'au moins 90% en poids de ε - caprolactame

4. Film selon une des revendications précédentes, **caractérisé en ce que** les sphérolithes individuels sont anisotropes au moins dans une couche (I).

5. Film selon une des revendications précédentes, **caractérisé en ce que** la couche (I) forme la couche extérieure de la feuille.

6. Film selon une des revendications précédentes, **caractérisé en ce qu'**un coté extérieur du film à couches multiples est une couche de scellement à couche unique ou couches multiples.

7. Film selon une des revendications précédentes, **caractérisé en ce qu'**il comprend au moins une couche contenant de l'EVOH.

8. Film selon une des revendications précédentes, **caractérisé en ce qu'**il comprend une ou plusieurs couches supplémentaires de polymères et / ou une couche composée de métal, de préférence de l'aluminium ou d'un oxyde de métal ou de métalloïde et / ou une impression entre deux couches ou sur le coté extérieur.

9. Film selon une des revendications précédentes, **caractérisé en ce que** tout le film à couches multiples ou la couche (I) comportant, de préférence, seulement des semi-composites sont orientés de façon longitudinale et / ou transversale.

10. Procédé pour fabriquer un film avec au moins une couche (I) composée de matières de remplissage solides, anisotropes et à nucléation comportant un polyamide cristallisé de façon essentiellement sphérolitique selon une des revendications précédentes d'après le procédé des films minces par :
(1) la fonte de polymères et par le moulage des fontes de polymère via une buse à fente large
(2) le refroidissement de la fonte de polymère et le durcissement en un film solide sur un cylindre rotatif présentant une température au maximum de 80°C pour au moins 0,1 secondes
(3) échauffement du film sur un cylindre rotatif présentant une température d'au moins 90°C pour au moins 0,05 secondes et
(4) éventuellement une orientation du film en direction longitudinale et / ou transversale après l'extrusion.

11. Utilisation du film selon une des revendications 1 à 9 pour fabriquer un matériau d'emballage , de préférence de conteneurs sur des machines à moulage, remplissage et scellement.

12. Utilisation du film selon une des revendications 1 à 9 pour l'emballage des aliments.
